Europäisches Patentamt

European Patent Office

Office européen des brevets

(11) Veröffentlichungsnummer: **0 553 708 A1**

## EUROPÄISCHE PATENTANMELDUNG

(21) Anmeldenummer: **93100856.9**

(51) Int. Cl.⁵: **B65D 85/76**, B32B 27/00

(22) Anmeldetag: **21.01.93**

(30) Priorität: **31.01.92 DE 4202727**

(43) Veröffentlichungstag der Anmeldung:
**04.08.93 Patentblatt 93/31**

(84) Benannte Vertragsstaaten:
**AT BE CH DE DK ES FR GB IE IT LI NL SE**

(71) Anmelder: **HOECHST AKTIENGESELLSCHAFT**

**W-6230 Frankfurt am Main 80(DE)**

(72) Erfinder: **Rohrka, Heinz-Werner,**
**Dipl.-Ingenieur**
**Aulgasse 2a**
**W-6229 Kiedrich(DE)**
Erfinder: **Sieben, Lothar**
**Von-Stauffenberg-Strasse 9**
**W-6501 Nieder-Olm(DE)**
Erfinder: **Müller, Rolf**
**Wenzel-Jaksch-Strasse 9**
**W-6200 Wiesbaden(DE)**
Erfinder: **Funk, Wolfgang**
**Bleichwiesenstrasse 5E**
**W-6200 Wiesbaden(DE)**

(54) **Folie für die Verpackung von scheibenförmigen Lebensmitteln.**

(57) Eine Folie 1 für die Verpackung von scheibenförmigen Lebensmitteln, wie z.B. von Käsescheiben, ist um das Lebensmittel als flachliegender Schlauch gewickelt und schließt dieses vollständig ein, wobei sich die beiden längsaxialen Randzonen der Folie überlappen und durch eine vollflächige oder partielle Heißsiegelschicht 4 miteinander verbunden sind. Die Folie besteht aus einer einlagigen oder koextrudierten mehrschichtigen, jeweils biaxial gestreckten und wärmefixierten Folie, die vollflächig oder partiell peelfähige Heißsiegelschichten und ein wasserabstoßendes Additivkomponentengemisch aufweist. Bei der Folie handelt es sich um eine Polyesterfolie oder um eine koextrudierte, mehrschichtige, nicht siegelfähige Polypropylenfolie mit einer Basisschicht aus Propylenpolymeren und Deckschichten aus Olefinpolymeren, insbesondere aus Propylenpolymeren. Die Heißsiegelschichten bestehen aus peelfähigem Olefinmischpolymerisat und/oder Polyestermischpolymerisat, während das wasserabstoßende Additivkomponentengemisch aus Polyethylen- oder Polypropylenwachsen, Fettsäureamiden und Polydialkylsiloxan oder Paraffinen zusammengesetzt ist.

EP 0 553 708 A1

Die Erfindung betrifft eine Folie für die Verpackung von scheibenförmigen Lebensmitteln, insbesondere von Käsescheiben, die um das Lebensmittel als flachliegender Schlauch gewickelt ist und dieses vollständig einschließt, wobei sich die beiden längsaxialen Randzonen der Folie überlappen und durch eine vollflächige oder partielle Heißsiegelschicht auf der Folie miteinander verbunden sind.

Aus der EP-A 0 372 348 ist eine Verpackung für scheibenförmige Lebensmittel mit im wesentlichen rechteckiger Fläche, insbesondere für Käsescheiben, bekannt, die aus einer gegebenenfalls bedruckten Folie besteht, die um das zu verpackende Lebensmittel in Form eines flachliegenden Schlauches gewickelt ist und dieses vollständig einschließt. Die Heißsiegelschicht erstreckt sich streifenförmig in der Nähe und parallel zu einem Rand der Folie und besteht im wesentlichen aus heißsiegelfähigem Olefinmischpolymerisat. Die Verpackungsaußenseite weist eine Beschichtung aus einer siliziumorganischen Verbindung, beispielsweise einem Polydialkylsiloxan, auf, während die Folie aus Polyester oder einem Polyolefin, insbesondere Propylenpolymeren, besteht.

Zur Herstellung einer Verpackung aus einer derartigen Folie ist es bekannt, die Folie zu einem Schlauch zu formen und in den Schlauch die erhitzte, viskose Käsemasse einzufüllen. Der gefüllte, schlauchförmige Folienstrang wird flachgedrückt und der nun bandförmige Käsestrang durch quer verlaufende stegartige Zonen in einzelne, noch zusammenhängende gefüllte Abschnitte unterteilt. Zum Abkühlen und Verfestigen der heißen Käsemasse wird der bandförmige Folien-Käse-Strang durch ein Wasserbad geführt und die Folienaußenseite anschließend mit Luft angeblasen, um das noch anhaftende Wasser zu entfernen. Schließlich wird der Strang im Bereich der quer verlaufenden stegartigen Zonen in einzelne verpackte Käsescheiben unterteilt und die Einzelpackungen gestapelt.

Aus der DE-A 35 09 384 ist bereits eine Polyolefinfolie bekannt geworden, bei der eine siegelbare Oberflächenschicht Polydialkylsiloxan enthält und die andere siegelbare Oberflächenschicht nur auf der Außenfläche Polydialkylsiloxan aufweist. Auch die Mehrschichtfolie nach der DE-A 35 17 795 enthält zumindest in einer der beiden nicht siegelfähigen Oberflächenschichten ein Polydialkylsiloxan. Beide Folien können auch für Verpackungszwecke eingesetzt werden. Einen Hinweis zur Lösung des Problems, das Blocken einer unzureichend getrockneten Verpackung zu verhindern, geben jedoch beide Druckschriften dem Fachmann nicht.

Zur Zeit gibt es mit einigen Käserezepturen Haftungsprobleme zwischen den eingesetzten Folien und dem Käse. Bei dem Auspacken der Scheibletten haftet, je nach Temperatur mal mehr oder weniger stark, Käse an der Folie. Das hat zur Folge, daß der Scheiblettenkäse nach dem Auspacken nicht mehr glänzend ist, sondern matt aussieht.

Bei den bisher eingesetzten Folien verbleibt an der Folienoberfläche, je nach Anlagetyp, nach dem Anblasen mit Luft noch relativ viel Restfeuchte haften. Durch diese Restfeuchte wird der Reibungskoeffizient der Folienoberfläche verschlechtert, und es treten Probleme beim Stapeln der einzelnen Packungen auf. Dadurch ergeben sich hohe Ausschußquoten beim Sortier- und Stapelvorgang.

Aufgabe der Erfindung ist es, eine verbesserte Folie für die Verpackung von scheibenförmigen Lebensmitteln, insbesondere von Käsescheiben, zu schaffen, die frei von Vinylidenchlorid-Mischpolymerisat ist, auf den bekannten Scheiblettenanlagen verarbeitet werden kann, eine Käsehaftung an beiden Folienseiten verhindert und bei der durch anhaftende Restfeuchte der Reibungskoeffizient der Folienoberflächen nicht verschlechtert wird, sondern im Vergleich zum Trockenzustand der Folienoberflächen praktisch konstant bleibt.

Diese Aufgabe wird dadurch gelöst, daß die Folie aus einer einlagigen oder koextrudierten mehrschichtigen, jeweils biaxial gestreckten und wärmefixierten Folie besteht, die vollflächig oder partiell peelfähige Heißsiegelschichten und ein wasserabstoßendes Additivkomponentengemisch aufweist.

In Ausgestaltung der Erfindung handelt es sich um eine Polyesterfolie, insbesondere um eine Polyethylenterephthalatfolie mit einer Dichte kleiner/gleich 1,4 g/cm$^3$ und einer Dicke von 8 bis 30, insbesondere von 10 bis 23 $\mu$m. In Weitergestaltung der Erfindung handelt es sich um eine koextrudierte, mehrschichtige, nicht siegelfähige Polypropylenfolie mit einer Basisschicht aus Propylenpolymeren und ein- oder beidseitig aufgebrachten Deckschichten, und weist die Folie eine Dichte von 0,55 bis 0,91 g/cm$^3$ und eine Dicke im Bereich von 8 bis 40, insbesondere 10 bis 25 $\mu$m, auf. Die Deckschichten der Folie bestehen aus Olefinpolymeren, insbesondere aus Propylenpolymeren. Zweckmäßigerweise bestehen die Heißsiegelschichten aus peelfähigem Olefinmischpolymerisat und/oder Polyestermischpolymerisat.

In der Praxis umfaßt das Olefinmischpolymerisat Ethylen- und/oder Propylen- und/oder Butylen-Einheiten und ist in wäßriger Dispersion oder als lösungsmittelhaltiger Lack auf die Folie aufgetragen und beträgt der Festkörpergehalt 30 bis 70 Gew.%, bezogen auf das Gesamtgewicht der Dispersion bzw. des Lackes. Das Polyestermischpolymerisat enthält Polyethylenterephthalat, und zwar mit einem Molekulargewicht von 5.000 bis 40.000 g/mol und einem Anteil von 10 bis 40 Gew.% und/oder Polyesterurethan mit einem Molekulargewicht von 2.000 bis 10.000 g/mol und einem Anteil von 1 bis 15 Gew.% und/oder ein Ketonharz mit einem Anteil von 1 bis 20 Gew.% und Additive mit einem Anteil von 0,5 bis 5 Gew.%. Das Polyestermischpolymerisat ist erfindungsgemäß als wäßrige Dispersion oder lösungsmittelhaltiger Lack mit einem Festkörpergehalt von 20 bis 70 Gew.% aufgetragen.

In Weiterführung der Erfindung sind die Heißsiegelschichten aus dem Polyestermischpolymerisat nach dem Entfernen der Dispersions- oder Lösungsmittel 1 bis 5 $\mu$m dick und erstrecken sich in Nähe und parallel zu den Randzonen der Folienbahn in einer Breite von 1 bis 10 cm, insbesondere 2 bis 4 cm.

Das erfindungsgemäß zur Anwendung gelangende wasserabstoßende Additivkomponentengemisch ist aus Polyethylen- oder Polypropylenwachsen, Fettsäureamiden und Polydialkylsiloxan zusammengesetzt. Ebenso kann das wasserabstoßende Additivkomponentengemisch Polyethylenwachse, Fettsäureamide und Paraffine enthalten. Das Auftragsgewicht des Additivkomponentengemisches beträgt 0,01 bis 20 g/m$^2$, insbesondere 0,05 bis 1 g/m$^2$. Zweckmäßigerweise ist das Additivkomponentengemisch gleichzeitig mit den Heißsiegelschichten aufgebracht oder direkt in die Heißsiegelschichten eingearbeitet. Die Folie ist im Tiefdruck oder Flexodruck bedruckt.

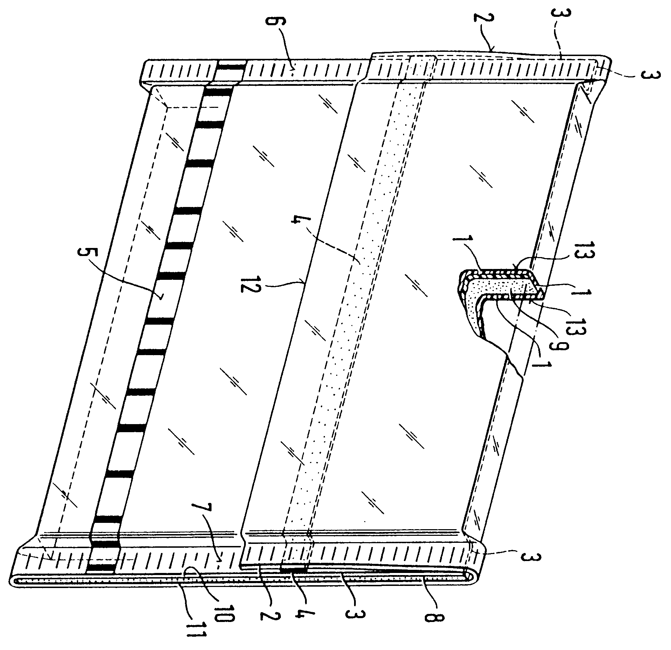

Die einzige Figur zeigt eine Ausführungsform einer aus der erfindungsgemäßen Folie 1 gebildeten Verpackungsform in perspektivischer Darstellung, die an einer oberen Stelle aufgebrochen ist. Die Folie 1 liegt eng an einer rechteckigen Käsescheibe 9 an und umhüllt diese vollständig. Überlappende Randzonen 2, 3 der schlauchförmig um die Käsescheibe gebogenen Folie 1 sind im Bereich einer streifenförmigen Heißsiegelschicht 4 aus peelfähigem Olefinmischpolymerisat und/oder Polyestermischpolymerisat miteinander verbunden. Die Heißsiegelschicht 4 verläuft in der Nähe und parallel zu einem Rand 12 der Folie und hat beispielsweise eine Breite von 2 bis 4 cm. Die Breite der Heißsiegelschicht 4 kann von 1 cm bis zu 10 cm betragen. Im unteren Bereich der Verpackung befindet sich ein bedrucktes Feld, das schematisch dargestellt ist und beispielsweise in Code-Form verschiedene Angaben zu dem verpackten Käse enthält. Wie die aufgebrochene Stelle der Figur zeigt, ist eine vollflächige Beschichtung 13 mit einem Additivkomponentengemisch vorgesehen, auf dem sich beispielsweise Druckfarbe befindet, falls die Folie 1 bedruckt ist. Im rechten Winkel zur Heißsiegelschicht 4 erstrecken sich rechts und links von der verpackten Käsescheibe stegartige Bereiche 6, 7, in denen zwei Folienlagen 10 und 11 übereinanderliegen. Zwischen den Folienlagen 10 und 11 ist eine äußerst dünne Käseschicht 8 eingeschlossen, die bewirkt, daß die zwei übereinanderliegenden Folienlagen aneinander haften. Im übrigen Verpackungsbereich zwischen den beiden Bereichen 6 und 7 ist die Käseschicht bzw. sind die zusammenliegenden Käsescheibletten wesentlich dicker und können eine Dicke bis zu 1 cm erreichen.

Das Aufbringen des Additivkomponentengemisches zur wasserabstoßenden Imprägnierung, zur Verbesserung des Reibungskoeffizienten und zur Reduzierung der Käse-Folien-Haftung, der Auftrag der partiellen oder vollflächigen Schicht aus heißsiegel- und peelfähigem Olefinmischpolymerisat oder Polyestermischpolyerisat und die Bedruckung erfolgen gleichzeitig in einem Arbeitsgang. Die Additivkomponentenmischung kann auch direkt in die Siegelschicht eingearbeitet werden. Das Aufbringen des heißsiegelfähigen Polymers und der Additivkomponentenmischung erfolgt zweckmäßigerweise auf der gleichen Tiefdruck- oder Flexodruckanlage. Die Zusammensetzung des Additivkomponentengemisches wird anhand der nachfolgenden Gemische verdeutlicht.

| **Gemisch Nr. 1** | **Gewichtsanteile** |
|---|---|
| Polyethylenwachse: | 1 - 80 % |
| Fettsäureamide: | 1 - 85 % |
| Polydialkylsiloxan: | 1 - 90 % |

| **Gemisch Nr. 2** | |
|---|---|
| Polypropylenwachse: | 1 - 80 % |
| Fettsäureamide: | 1 - 85 % |
| Polydialkylsiloxan | 1 - 90 % |

| **Gemisch Nr. 3** | |
|---|---|
| Polyethylenwachse: | 1 - 85 % |
| Paraffine: | 1 - 75 % |
| Fettsäureamide: | 1 - 85 % |

Es sind auch Mischungen aus zwei oder mehreren Einzelkomponenten der voranstehenden Gemische verwendbar. Praxisgerecht ist ein Gemisch, bei dem jeder Bestandteil rund 1/3 des Gesamtgemisches in Gew.% ausmacht.

Das Auftragsgewicht der Komponenten beträgt vorzugsweise zwischen 0,01 und 20 g/m$^2$, insbesondere 0,05 bis 1 g/m$^2$.

Die zur Herstellung der Verpackung geeignete Folie besteht aus einer einlagigen oder koextrudierten mehrschichtigen Polyesterfolie, insbesondere einer Polyethylenterephathalatfolie, die durch biaxiale Streckung und Fixierung orientiert ist. Ihre Dicke liegt im Bereich von 8 bis 30, insbesondere 10 bis 23 Mikrometer. Ebenso können Folien aus transparenten oder opaken, einlagigen oder aus einer koextrudierten mehrschichtigen, biaxial gestreckten Polyolefinfolie bestehen, wobei die Basisschicht im wesentlichen aus Propylenpolymeren und die Deckschichten einseitig oder beidseitig aus Olefinpolymeren, insbesondere aus Propylenpolymeren, bestehen. Ihre Dichte liegt zwischen 0,55 und 0,91 g/cm$^3$, ihre Dicke im Bereich von 8 bis 40, insbesondere 10 bis 35 Mikrometern.

Das heißsiegelfähige Olefinmischpolymerisat umfaßt beispielsweise Ethylen- und gegebenenfalls Propylen- und/oder Butylen-Einheiten und wird in wäßriger Dispersion oder lösungsmittelhaltigem Lack auf die Folie aufgetragen, wobei der Feststoffgehalt gewöhnlich 30 bis 70 Gew.%, bezogen auf das Gesamtgewicht der Dispersion bzw. des Lackes, beträgt.

Das heißsiegelfähige Polyestermischpolymerisat besteht aus Polyethylenterephthalat mit einem Molekulargewicht von 5.000 bis 40.000 g/mol und einem Gewichtsanteil von 10 bis 40 % und/oder einem Polyesterurethan mit einem Molekulargewicht von 2.000 bis 10.000 g/mol und einem Gewichtsanteil von 1 bis 15 % und/oder einem Ketonharz mit einem Gewichtsanteil von 1 bis 20 % und Additiven mit einem Gewichtsanteil von 0,5 bis 5 %. Das Polyestermischpolymerisat wird als wäßrige Dispersion oder lösungsmittelhaltiger Lack auf die Folie aufgebracht. Der Feststoffgehalt liegt gewöhnlich bei 20 bis 70 Gew.% des Lackes bzw. der Dispersion.

Nach dem Entfernen der Dispersions- oder Lösungsmittel wird ein partieller oder vollflächiger Überzug aus den Siegellacken erhalten. Die Dicke der Schicht hängt von der gewünschten Siegelnahtfestigkeit ab. Gewöhnlich wird eine Schichtdicke von 1 bis 5 Mikrometern aufgetragen, so daß eine ausreichende Versiegelung zwischen Siegelschicht und Folie, sowie eine peelfähige Versiegelung Siegellack gegen Siegellack erzielt wird. Der partielle, heißsiegelfähige Überzug erstreckt sich in der Nähe und parallel zu den Randzonen der Folienbahn und hat gewöhnlich eine Breite von 1 bis 10 cm, insbesondere 2 bis 4 cm, wie schon voranstehend anhand der einzigen Figur erläutert wurde.

Zur Herstellung der Verpackung wird für das zu verpackende Gut zunächst auf einer vertikalen Form-Füll-Schließmaschine aus der Folie ein Schlauch geformt und die längsaxiale Naht entlang der streifenförmigen Siegelschicht gebildet. Gleichzeitig wird von oben in den Schlauch das Lebensmittel, z.B. Käse, in pastöser Form eingefüllt. Der gefüllte Schlauch wird flachgedrückt und in querverlaufenden stegartigen Zonen soweit zusammengepreßt, daß das pastöse Lebensmittel zwischen den beiden Folienlagen fast völlig entfernt ist. Nach Durchlaufen eines kalten Wasserbades wird der flachliegende Folienschlauch im rechten Winkel zur Siegelnaht in den stegartigen Zonen durchtrennt. An den beiden Trennkanten ist die Verpackung nur durch Verpressen der übereinanderliegenden Folienlagen verschlossen, wobei die Folienlagen durch geringe Mengen von dazwischenliegendem, durch die Abkühlung verfestigtem Lebensmittel miteinander verklebt sind. Das zu verpackende Gut, zum Beispiel eine rechteckige Käsescheibe, ist nach dem Abkühlen im Wasserbad und dem Durchtrennen der stegartigen Zonen von der Folie eng anliegend umhüllt, und die beiden sich überlappenden Randzonen der Folie sind im Bereich der heißsiegelfähigen Schicht versiegelt.

Die verbesserten Oberflächeneigenschaften und die Heißsiegelfähigkeit der für die Verpackungen zu verwendenden Folien werden anhand der nachfolgenden Beispiele verdeutlicht.

## Beispiel 1:

Zwei Folien, eine einlagige, biaxial streckorientierte Polyethylenterephthalatfolie (PET) mit einer Dicke von 12 Mikrometern und eine koextrudierte dreischichtige, nicht siegelfähige Polypropylenfolie (BOPP) mit einer Dicke von 15 Mikrometern werden im Flexodruck mit dem Additivkomponentengemisch Nr. 1 vollflächig beschichtet: unmittelbar danach wird partiell ein Lack aus Ethylen-Propylen-Mischpolymerisat aufgetragen.

## Beispiel 2:

Zwei Folien, eine einlagige, biaxial streckorientierte PET-Folie mit einer Dicke von 12 Mikrometern und eine koextrudierte dreischichtige, nicht siegelfähige BOPP-Folie mit einer Dicke von 15 Mikrometern werden zunächst vollflächig mit einem Polyestermischpolymerisat beschichtet, unmittelbar danach wird vollflächig das Additivkomponentengemisch Nr. 2 auf die Siegelschicht aufgetragen.

## Beispiel 3:

Zwei Folien, eine einlagige, biaxial streckorientierte PET-Folie mit einer Dicke von 12 Mikrometern und eine koextrudierte dreischichtige, nicht siegelfähige BOPP-Folie mit einer Dicke von 15 Mikrometern werden vollflächig mit einen Polyestermischpolymerisat beschichtet. Bei diesem Polyesterlack ist das Additivkomponentengemisch Nr. 3 eingearbeitet.

Bei allen sechs Mustern wurde der Reibungskoeffizient und die Haftung Käse-Folie beurteilt. Als Käse wurde ein sehr weicher Schmelzkäse verwendet, der einen Laktosegehalt von größer 5 % hat. Die Messung des Reibungskoeffizienten erfolgte nach TNO (veröffentlicht in "Measurement of Coefficient of Friction at Flexible Packaging Materials", J.W. Dorsteen und E. Mot., Packaging India, Vol. 5 Nr. 3, April/June 1973) vor dem Wasserkontakt und nach dem Wasserkontakt und Abblasen des an der Folie haftenden Wassers mit Luft.

Als Vergleichsfolie wurde eine PVDC-beschichtete PET-Folie verwendet, die üblicherweise zur Herstellung von Scheibletten eingesetzt wird. Die Beschichtung mit einem Additivkomponentengemisch unterblieb.

## Reibungskoeffizient

|  | vor Wasserkontakt | | nach Wasserkontakt und Trocknung · | |
|---|---|---|---|---|
|  | Seite A | Seite B | Seite A | Seite B |
| **Beispiel 1** | | | | |
| PET/Siegel-streifen | 0,10-0,15 | 0,12-0,17 | 0,12-0,15 | 0,14-0,19 |
| BOPP/Siegel-streifen | 0,10-0,15 | 0,12-0,17 | 0,12-0,15 | 0,14-0,19 |
| **Beispiel 2** | | | | |
| PET/Siegel-schichten | 0,10-0,15 | 0,12-0,17 | 0,12-0,15 | 0,14-0,19 |
| BOPP/Siegel-schichten | 0,10-0,15 | 0,12-0,17 | 0,12-0,15 | 0,14-0,19 |
| **Beispiel 3** | | | | |
| PET/Siegel-streifen | 0,12-0,16 | 0,14-0,18 | 0,14-0,18 | 0,16-0,2 |
| BOPP/Siegel-streifen | 0,12-0,16 | 0,14-0,18 | 0,14-0,18 | 0,16-0,2 |
| **PET/PVDC** | 0,19-0,21 | 0,22-0,25 | 0,25-0,30 | 0,28-0,32 |

Die Folien aus den Beispielen 1 bis 3 hatten nach dem Anblasen mit Luft eine geringere Wasserhaftung an der Folienoberfläche als die PVDC-beschichtete PET-Folie.

Zur Beurteilung der Haftung Käse zur Folie wurde 90 °C warmer Schmelzkäse auf die Folien gegossen, und beides wurde mit Wasser sofort abgekühlt.

**Beurteilung**

+ +    Keine Haftung, Käse fällt von der Folie Käseoberfläche glänzt.

+    Leichtes Haften, Käse läßt sich noch gut von der Folie trennen.

0    Käse trennt sich schwieriger von der Folie, Käseoberfläche ist teilweise matt.

-    Käse trennt sich schwer von der Folie, Käseoberfläche ist matt.

|  | **Seite A** | **Seite B** |
|---|---|---|
| **Beispiel 1** | | |
| PET/Siegelstreifen | ++ | + |
| BOPP/Siegelstreifen | ++ | + |
| **Beispiel 2** | | |
| PET/Siegelstreifen | ++ | + |
| BOPP/Siegelstreifen | ++ | + |
| **Beispiel 3** | | |
| PET/Siegelstreifen | + | + |
| BOPP/Siegelstreifen | + | 0 |
| **PET/PVDC** | 0 | 0 |

Zur Überprüfung der Siegelnahtfestigkeit wurde zunächst Lack gegen Folie und Lack gegen Lack bei 130 °C und 5 bar Druck 0,5 sec. lang gesiegelt. Aus den gesiegelten Mustern wurden Prüfstreifen von 10 cm Länge und 15 mm Breite geschnitten.

Bei der Siegelung der PVDC-Beschichtung gegen eine unbeschichtete PET-Folie ergibt sich keine Verbindung, bei der Siegelung PVDC gegen PVDC ist eine Kraft von 1N/15 mm erforderlich, um die Folien voneinander zu trennen. Dagegen beträgt die Kraft, die erforderlich ist, um die Polyesterfolie und Polypropylenfolie mit der Ethylencopolymerschicht und der Polyestersiegelschicht von der dagegen gesiegelten unbeschichteten Folie abzuziehen, 0,3 bis 0,8 N/15 mm. Bei der Siegelung Siegelschicht gegen Siegelschicht werden Werte von 0,8 bis 1,5 N/15 mm erreicht.

**Patentansprüche**

1. Folie für die Verpackung von scheibenförmigen Lebensmitteln, insbesondere von Käsescheiben, die um das Lebensmittel als flachliegender Schlauch gewickelt ist und dieses vollständig einschließt, wobei sich die beiden längsaxialen Randzonen der Folie überlappen und durch eine vollflächige oder partielle Heißsiegelschicht auf der Folie miteinander verbunden sind, dadurch gekennzeichnet, daß die Folie aus einer einlagigen oder koextrudierten mehrschichtigen, jeweils biaxial gestreckten und wärmefixierten Folie besteht, die vollflächig oder partiell peelfähige Heißsiegelschichten und ein wasserabstoßendes Additivkomponentengemisch aufweist.

2. Folie nach Anspruch 1, dadurch gekennzeichnet, daß es sich um eine Polyesterfolie, insbesondere eine Polyethylenterephthalatfolie mit einer Dichte kleiner/gleich 1,4 g/cm$^3$ und einer Dicke von 8 bis 30, insbesondere von 10 bis 23 $\mu$m, handelt.

3. Folie nach Anspruch 1, dadurch gekennzeichnet, daß es sich um eine koextrudierte, mehrschichtige, nicht siegelfähige Polypropylenfolie mit einer Basisschicht aus Propylenpolymeren und ein- oder beidseitig aufgebrachten Deckschichten handelt und daß die Folie eine Dichte von 0,55 bis 0,91 g/cm$^3$ und eine Dicke im Bereich von 8 bis 40, insbesondere 10 bis 30 $\mu$m, aufweist.

4. Folie nach Anspruch 3, dadurch gekennzeichnet, daß die Deckschichten aus Olefinpolymeren, insbesondere aus Propylenpolymeren, bestehen.

5. Folie nach Anspruch 1, dadurch gekennzeichnet, daß die Heißsiegelschichten aus peelfähigem Olefinmischpolymerisat und/oder Polyestermischpolymerisat bestehen.

6. Folie nach Anspruch 5, dadurch gekennzeichnet, daß das Olefinmischpolymerisat Ethylen- und/oder Propylen- und/oder Butylen-Einheiten umfaßt und in wäßriger Dispersion oder als lösungsmittelhaltiger Lack auf die Folie aufgetragen ist und daß der Feststoffgehalt 30 bis 70 Gew.%, bezogen auf das Gesamtgewicht der Dispersion bzw. des Lackes, beträgt.

7. Folie nach Anspruch 5, dadurch gekennzeichnet, daß das Polyestermischpolymerisat Polyesterterephthalatsäure mit einem Molekulargewicht von 5.000 bis 40.000 g/mol und einem Anteil von 10 bis 40 Gew.% und/oder Polyesterurethan mit einem Molekulargewicht von 2.000 bis 10.000 g/mol und einem Anteil von 1 bis 15 Gew.% und/oder ein Ketonharz mit einem Anteil von 1 bis 20 Gew.% und Additive mit einem Anteil von 0,5 bis 5 Gew.% enthält.

8. Folie nach Anspruch 7, dadurch gekennzeichnet, daß das Polyestermischpolymerisat als wäßrige Dispersion oder lösungsmittelhaltiger Lack mit einem Feststoffgehalt von 20 bis 70 Gew.% aufgetragen ist.

9. Folie nach Anspruch 8, dadurch gekennzeichnet, daß die Heißsiegelschichten aus dem Polyestermischpolymerisat nach dem Entfernen der Dispersions- oder Lösungsmittel 1 bis 5 $\mu$m dick sind und sich in Nähe und parallel zu den Randzonen der Folienbahn in einer Breite von 1 bis 10 cm, insbesondere 2 bis 4 cm, erstrecken.

10. Folie nach Anspruch 1, dadurch gekennzeichnet, daß das wasserabstoßende Additivkomponentengemisch aus Polyethylen- oder Polypropylenwachsen, Fettsäureamiden und Polydialkylsiloxan zusammengesetzt ist.

11. Folie nach Anspruch 1, dadurch gekennzeichnet, daß das wasserabstoßende Additivkomponentengemisch Polyethylenwachse, Fettsäureamide und Paraffine enthält.

12. Folie nach Anspruch 10 oder Anspruch 11, dadurch gekennzeichnet, daß das Auftragsgewicht des Additivkomponentengemisches 0,01 bis 20 g/m$^2$, insbesondere 0,05 bis 1 g/m$^2$, beträgt.

13. Folie nach Anspruch 1, dadurch gekennzeichnet, daß das Additivkomponentengemisch gleichzeitig mit den Heißsiegelschichten aufgebracht oder direkt in die Heißsiegelschichten eingearbeitet ist.

| | **EINSCHLÄGIGE DOKUMENTE** | | EP 93100856.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,X | <u>EP - A - 0 372 348</u><br>(HOECHST AG)<br>   * Ansprüche 1,3; Seite 2,<br>   Zeilen 32-39; Seite 2,<br>   Zeilen 40-43 *<br>-- | 1,2-4,<br>5,6 | B 65 D 85/76<br>B 32 B 27/00 |
| A | <u>DE - A - 3 624 543</u><br>(WOLFF WALSRODE AG)<br>   * Gesamt *<br>-- | 1,3,4,<br>5 | |
| A | <u>US - A - 4 419 410</u><br>(WEINER)<br>   * Ansprüche *<br>-- | 1,3,4,<br>10,11 | |
| A | <u>EP - A - 0 189 242</u><br>(MOBIL OIL CORP.)<br>   * Gesamt *<br>-- | 1,3,<br>10,11 | |
| A | <u>DE - A - 3 940 197</u><br>(HOECHST AG)<br>   * Spalte 3, Zeilen 25-56 *<br>-- | 1,3,5 | |
| D,A | <u>DE - A - 3 509 384</u><br>(HOECHST AG)<br>   * Seite 14, Zeilen 18-21 *<br>-- | 1,3 | RECHERCHIERTE SACHGEBIETE (Int. Cl.⁵)<br><br>B 32 B 27/00<br>B 65 B 25/00<br>B 65 D 65/00 |
| D,A | <u>DE - A - 3 517 795</u><br>(HOECHST AG)<br>   * Gesamt *<br>---- | 1,3 | B 65 D 75/00<br>B 65 D 85/00 |

Der vorliegende Recherchenbericht wurde für alle Patentansprüche erstellt.

| Recherchenort<br>WIEN | Abschlußdatum der Recherche<br>11-05-1993 | Prüfer<br>MELZER |
|---|---|---|